# EUROPÄISCHE PATENTSCHRIFT

(11) **EP 3 059 566 B1**
(45) Veröffentlichungstag und Bekanntmachung des Hinweises auf die Patenterteilung: **07.11.2018**
(21) Anmeldenummer: 15185326.4
(22) Anmeldetag: 15.09.2015
(51) Int. Cl.: G01L 13/02, G01L 19/02

(54) **DIFFERENZDRUCKSENSOR**
DIFFERENTIAL PRESSURE SENSOR
CAPTEUR DE PRESSION DIFFERENTIEL

(30) Priorität: 15.09.2014 DE 102014113281
(43) Veröffentlichungstag der Anmeldung: 24.08.2016
(73) Patentinhaber: Samson AG, 60314 Frankfurt (DE)
(72) Erfinder: Valentin-Rumpel, Frank, 64823 Groß-Umstadt (DE); Rausch, Sven, 61137 Schöneck (DE)
(74) Vertreter: Puschmann Borchert Bardehle Patentanwälte Partnerschaft mbB

(56) Entgegenhaltungen:
- WO-A1-02/055978
- DE-A1- 4 317 067
- DE-A1-102013 003 270
- US-A- 5 317 918

## Beschreibung

Die Erfindung betrifft eine Differenzdruckmesseinrichtung gemäß Anspruch 1.

Eine gattungsgemäße Differenzdruckmesseinrichtung ist aus der DE 101 13 291 A1 bekannt. Diese Differenzdruckmesseinrichtung umfasst ein Gehäuse mit zwei gegeneinander abgedichteten Druckbereichen, die durch ein Trägerelement getrennt sind. Ferner weist der Differenzdrucksensor ein mit dem Trägerelement ortsfest verbundenes Magnetelement auf, dessen Lage durch einen vorgesehenen Sensor berührungslos auswertbar ist. Das Magnetelement ist an einem Stab angebracht, der von zwei Trägerelementen gehalten wird, um eine gute axiale Führung zu ermöglichen.

Bei der berührungslosen Messung der Verschiebung einer mit dem Trägerelement verbundenen Druckplatte muss eine hohe Genauigkeit bei der Lageänderung der Druckplatte vorliegen, da es sonst zu erheblichen Messfehlern kommt.

Weiter sind die folgend beschriebenen Differenzdruckmesseinrichtungen bekannt.

Die WO 02 / 099078 A1 offenbart eine Differenzdruckmesseinheit, bei welcher eine Messzelle in einem Druckbehälter, der mit Übertragungsflüssigkeit gefüllt ist, aufgenommen ist.

Die US 5,317,918 A, offenbart eine Differenzdruckmesseinrichtung, die zwei Druckkammern über einen axial verschieblichen Kondensatorplattenträger verbindet. Die kreisförmigen ersten Kondensatorplatten des Kondensatorplattenträgers wirken mit den konzentrisch zu den ersten Kondensatorplatten angeordneten zweiten Kondensatorplatten, derart zusammen, dass die zwischen den Kondensatorplatten bestehende Kapazität abhängig vom axialen Abstand der Kondensatorplatten zueinander ist, der wiederum vom Differenzdruck in den beiden Druckkammern abhängt.

Es ist Aufgabe der Erfindung eine Gestaltung anzugeben, die eine präzisere Nulllage ermöglicht.

Erfindungsgemäß ist daher vorgesehen, dass die Membran eine Druckplatte umfasst, die von einem elastischen Umfangsbereich umgeben ist, wodurch eine axiale Bewegung der Druckplatte gewährleistet ist. Ferner sind wenigstens drei Federpaare vorgesehen, wobei je eine Feder der Federnpaare in einem zugeordneten Druckbereich angeordnet ist und die Federn des Federnpaares eine entgegengesetzte Federkraft auf die Druckplatte ausüben.

Durch die entgegengesetzten Federkräfte, die auf die Druckplatte wirken, wird ein stabiler Gleichgewichtszustand erzeugt, der als Nulllage fungiert. Dadurch kann eine Druckveränderung bei kleiner Wegveränderung präzise erfasst werden.

Erfindungsgemäß sind wenigstens drei Federnpaare vorgesehen. Diese sind auf einer Kreislinie, vorzugsweise im radial äußeren Bereich, an der kreisförmigen Druckplatte gelagert, wobei ein Federnpaar zwei koaxial angeordnete Schraubenfedern umfasst.

Eine Gleichverteilung der Federn in Umlaufrichtung sorgt für eine gleichmäßige Parallelverschiebung der kreisförmigen Druckplatte.

Vorzugsweise sind die Federn als Druckfedern ausgebildet. Durch die gegeneinander wirkenden Federn des Federnpaares erfolgt eine Einspannung der Druckplatte, durch welche diese stabil in einer Gleichgewichtslage festgelegt ist. So wird die Druckplatte auch in radialer Richtung von den Federn gehalten, wobei diese in radialer Richtung weicher sein können als in axialer.

Überraschenderweise kann trotz einer fehlenden Führung der Druckplatte eine axiale Relativbewegung derselben mittels der beschriebenen Sensorik in Abhängigkeit einer anliegenden Druckdifferenz zwischen beiden Druckbereichen sehr präzise gemessen werden.

Die Federhärten und Vorspannungen können so gewählt sein, dass sich eine definierte stabile Nulllage bei vorab gewählten Druckzuständen ergibt.

Vorzugsweise kann auch eine geringe Überhöhung der Federspannung in einem Druckbereich vorliegen, so dass diese gegen einen auf der anderen Seite der Druckplatte vorgesehenen Anschlag arbeitet. Der Anschlag kann bei einer entsprechend vorliegenden Druckdifferenz als Anlage für eine Nulllage genutzt werden.

Beidseitig der Druckplatte in den jeweiligen Druckbereichen können neben der je einen Feder des Paares auch weitere Federn angeordnet sein. Die Federn je Druckraum weisen insbesondere dieselbe Kraftrichtung auf, wie die jeweiligen dem Druckraum zugeordneten Federn des Federnpaares. So kann beispielsweise den Druckbereichen eine unterschiedliche Anzahl von Federn zugeordnet sein. Vorzugsweise können die Federn an der Druckplatte entlang eines Kreisumfangs angeordnet sein. Besonders vorteilhaft wären z.B. eine Druckfeder in dem einen Druckraum, die insbesondere in der Mitte der Druckplatte wirkt, und drei Druckfedern in dem anderen Druckraum, die insbesondere gleichmäßig entlang eines zur Mitte konzentrischen Kreisumfangs liegen.

Ferner kann vorgesehen sein, dass die einem Druckbereich zugeordneten Federn gleichartig sind. Dies unterstützt eine strikte Axialverschiebung der Druckplatte, ohne dass die Druckplatte verkippt. Eine unterschiedliche Federauswahl je Druckraum erlaubt die Anpassung an den Anwendungszweck.

In einer einfachen Ausgestaltung umfasst ein Federnpaar zwei am Umfang angeordnete Schraubenfedern. Die Anordnung am Umfang verhindert ein Verkippen der Druckplatte, insbesondere, wenn drei oder mehr vorzugsweise sechs Federnpaare dergestalt angeordnet sind.

Vorzugsweise kann das Indikatorelement exzentrisch an der Druckplatte angeordnet sein. Dadurch kann das Indikatorelement besonders nahe an die Wandung des Gehäuses des Differenzdruckmessers herangebracht werden. Dies sorgt für eine präzisere Messung, da der Sensor nicht so weit in das Gehäuse eingebracht werden muss. Für die exzentrische Anordnung des Indikatorelements ist die Vermeidung des Verkippens der Druckplatte durch die vorangehend beschriebenen Maßnahmen wesentlich bzw. wird eine exzentrische Anordnung erst durch eine solche Abstützung ermöglicht.

Der Sensor ist vorzugsweise über eine Wandung vom Druckbereich getrennt. Dadurch kann die Sensoranordnung unabhängig vom Fluid gestaltet werden. Die Wandung ist in ihrer Dichte derart bemessen, dass eine berührungslose Messung durch den Sensor erfolgen kann. Die Wandung kann Teil des Gehäuses sein und beispielsweise bereitgestellt werden, indem ein Sackloch in das Gehäuse eingebracht wird. In dieses Sackloch kann dann der Sensor relativ nah der Wandung eingesetzt werden. Bei einer exzentrischen Anordnung des Indikatorelements, kann die Sacklochtiefe sehr gering gehalten werden, was wiederum Vorteile bei der Montage und Wartung mit sich bringt.

Gemäß einer weiteren erfindungsgemäßen Ausgestaltung kann zur berührungslosen Positionsmessung das Indikatorelement ein Magnet sein, dessen Magnetfeld von einem AMR-Sensor (anisotroper magnetoresistiver Effekt) oder beliebigem Magnetsensor detektiert wird. Auch induktive oder kapazitive Umsetzungen der berührungslosen Messung sind denkbar.

Die Verwendung eines AMR-Sensors hat den Vorteil, dass dieser bei entsprechender Ausrichtung des Magnetfeldes des Indikators weitestgehend unempfindlich gegen eine radiale Abstandsänderung des Magneten ist. Durch die Nutzung eines AMR-Sensors kann eine Verkippung der Druckplatte und die daraus ungewollt resultierende anteilige Radialbewegung des Magneten kompensiert werden. In einer besonders vorteilhaften Weiterbildung können auch mehrere Sensorsysteme, umfassend einen Sensor und ein zugeordnetes Indikatorelement, am Umfang angebracht sein, um die Messgenauigkeit noch weiter zu erhöhen.

Die Auswahl der Sensoranordnung mit geringer Sensitivität in radialer Bewegungsrichtung der Druckplatte und hoher Sensitivität in Axialrichtung sowie der Kombination und Auslegung der Federn ermöglicht ein präzises Messsystem mit geringer Hysterese. Geringe Hysterese auch, da keine zusätzlichen Führungen benötigt werden.

In einer weiteren Ausgestaltung kann das Indikatorelement in Axialrichtung zwischen den von der Druckplatte entfernt liegenden Enden des Federnpaares insbesondere nahe an der Druckplatte liegen. Dies erlaubt eine kompakte Bauform des Differenzdruckmessers.

Da die axiale Relativbewegung zwischen Sensor und Indikatorelement von zentraler Bedeutung ist, wirkt sich dies auf die Lagerung des Sensors aus.

Der Sensor kann in der vorgesehenen Bewegungsrichtung des Indikatorelements gegen die Gehäusewandung durch Federelemente abgestützt sein. Insbesondere quer zur Bewegungsrichtung kann auch eine federbelastete Lagerung vorliegen. In der dritten den Raum aufspannenden Richtung kann der Sensor mittels eines Elements, durch welches eine zentrierte Fixierung gewährleistet ist, aufgenommen werden.

Durch eine federbelastete Lagerung des Sensors können Lageänderungen des Sensors, wie sie beispielsweise bei einer Gehäuseausdehnung aufgrund thermischer Einflüsse entstehen, verhindert werden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:

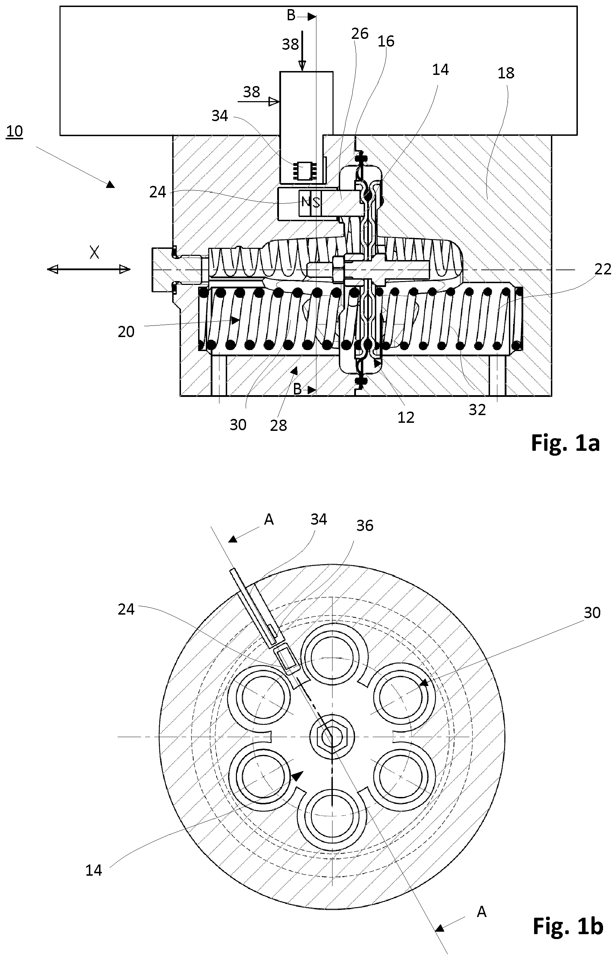

- Fig. 1a: eine Schnittansicht einer erfindungsgemäßen Differenzdruckmesseinrichtung;
- Fig. 1: b eine Schnittansicht B-B einer erfindungsgemäßen Differenzdruckmesseinrichtung, und
- Fig. 2: eine Schnittansicht einer erfindungsgemäßen Differenzdruckmesseinrichtung.

Fig. 1a zeigt eine Schnittansicht einer erfindungsgemäßen Differenzdruckmesseinrichtung 10. Die Differenzdruckmesseinrichtung 10 umfasst eine Membran 12, die eine Druckplatte 14 aufweist, welche von einem elastischen Umfangsbereich 16 umgeben ist, der die Druckplatte 14 mit dem Messumformergehäuse18 verbindet. Die Membran 12 dichtet zwei Druckbereiche 20, 22 gegeneinander ab. Mit der Druckplatte 14 ist ein Magnet 24 über ein Anlenkelement 26 ortsfest verbunden. Bei Änderung der Druckdifferenz zwischen den Druckbereichen 20, 22 bewegt sich die Druckplatte 14 der Membran 12 in axialer Richtung x. Der ortsfest zur Druckplatte 14 angeordnete Magnet 24 folgt dieser Bewegung.

Da die Druckplatte 14 in einem radial und axial weichen Umfangsbereich 16 gelagert ist, wird die Druckplatte 14 erfindungsgemäß durch zwei Federnpaare 28 abgestützt. Ein Federnpaar 28 umfasst dabei zwei Druckfedern 30, 32, die koaxial angeordnet sind. Somit wird die Federkraft auf denselben Punkt ausgeübt, wodurch eine verkippungsfreie Anordnung gegeben ist. Wie der Fig. 1 weiter zu entnehmen ist, sind die Federn 32 im Druckraum 22 geringer dimensioniert als die Federn 30 im Druckraum 20. Dadurch kann eine Voreinstellung an zu erwartende Druckdifferenzen getroffen werden. Zur Auswertung der Axialverschiebung der Druckplatte 14 ist ein Sensor 34 vorgesehen. Der Sensor 34 ist über eine Wandung 36 vom ersten Druckbereich 30 getrennt. Der AMR-Sensor kann so berührungslos die axiale Verschiebung des Magneten 24 detektieren. Der Sensor ist über die Feder 38 mit der Gehäusewandung verspannt, wodurch eine Bewegung in Richtung x des Sensors effektiv verhindert wird.

Fig. 1b zeigt eine Schnittansicht B-B einer erfindungsgemäßen Differenzdruckmesseinrichtung 10, wo besonders gut die umlaufende Anordnung der Druckfedern 30 zu erkennen ist, die sich an der Druckplatte 14 abstützen. Durch die Verwendung von sechs Federnpaaren 28 wird eine gleichmäßige Belastung der Druckplatte erreicht und eine Verkippung dieser effektiv verhindert. Ferner dargestellt sind der Sensor 34 sowie der Magnet 24. Die Ausnehmung des Gehäuses, in welcher der AMR-Sensor 34 eingesetzt ist, ist als Sackloch ausgebildet, wobei die Wandung 36 die Ausnehmung von dem Druckbereich trennt.

Fig. 1a und 1b zeigen eine Ausgestaltung, bei welcher der Magnet 24 exzentrisch an der Druckplatte angeordnet ist. Durch die Lagerung der Druckplatte 14 durch mehrere Federnpaare 28 und der in radialer Richtung wenig sensitiven Verwendung eines AMR-Sensors 34, führt auch eine exzentrische Anordnung zu präzisen Messergebnissen.

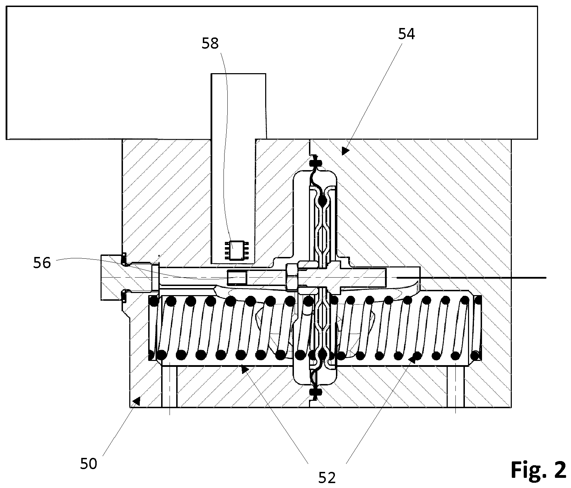

Fig. 2 zeigt eine Differenzdruckmesseinrichtung 50 analog der zuvor beschriebenen Differenzdruckmesseinrichtung 10, wobei eine Vielzahl von Federnpaaren 52 vorgesehen ist, die eine Membran 54 abstützen. Entgegen der Ausgestaltung in Fig. 1a ist der Magnet 56 an einer zentralen Mittelstange angeordnet. Dies hat zur Folge, dass der AMR-Sensor 58 weiter in das Gehäuse eingebracht werden muss, um eine valide Messung zu gewährleisten. Durch die erfindungsgemäße Anordnung kann so auf präzise Weise berührungslos der Differenzdruck bestimmt werden.

### Bezugszeichenliste

- 10 / 50: Differenzdruckmesseinrichtung
- 12: Membran
- 14: Druckplatte
- 16: elastischer Umfangsbereich
- 18: Messumformergehäuse
- 20: Druckbereich
- 22: Druckbereich
- 24: Magnet
- 26: Anlenkelement
- 28: Federnpaare
- 30: Druckfeder
- 32: Druckfeder
- 34: Sensor
- 36: Wandung
- 52: Federnpaare
- 54: Membran
- 56: Magnet
- 58: Sensor

## Patentansprüche

1. Differenzdruckmesseinrichtung (10, 50) umfassend ein Gehäuse (18) mit zwei gegeneinander abgedichteten Druckbereichen (20, 22), die durch eine Membran (12, 54) getrennt sind, wobei die Membran (12, 54) eine kreisförmige Druckplatte (14) umfasst, die von einem elastischen Umfangsbereich (16) umgeben ist, wodurch eine axiale Bewegung der Druckplatte (14) gewährleistet ist, wobei ferner ein mit der Druckplatte (14) ortsfest verbundenes Indikatorelement (24, 56) vorgesehen ist, dessen Lage durch einen vorgesehenen Sensor (34, 58) berührungslos auswertbar ist, wobei ferner wenigstens ein Federnpaar (28, 52) vorgesehen ist, wobei je eine Feder (30, 32) des Federnpaares in einem zugeordneten Druckbereich (20, 22) angeordnet ist und die Federn (30, 32) des Federnpaares (28, 52) eine entgegengesetzte Federkraft auf die Druckplatte (14) ausüben, **dadurch gekennzeichnet, dass** wenigstens drei Federnpaare (28, 52) vorgesehen sind, wobei je ein Federnpaar (28, 52) zwei koaxial angeordnete Schraubenfedern umfasst und die einem Druckbereich zugeordneten Federn (28, 52) entlang eines Kreisumfangs verteilt sind.

2. Differenzdruckmesseinrichtung nach Anspruch 1, **dadurch gekennzeichnet, dass** die einem Druckbereich (20, 22) zugeordneten Federn (30, 32) gleichartig sind.

3. Differenzdruckmesseinrichtung nach einem der vorangehenden Ansprüche, **dadurch gekennzeichnet, dass** das Indikatorelement (24, 56) exzentrisch an der Druckplatte angeordnet ist.

4. Differenzdruckmesseinrichtung nach einem der vorangehenden Ansprüchen, **dadurch gekennzeichnet, dass** das Indikatorelement (24, 56) in Axialrichtung zwischen den von der Druckplatte entlegenen Enden des Federpaares (28, 52) liegt.

5. Differenzdruckmesseinrichtung nach einem der vorangehenden Ansprüche, **dadurch gekennzeichnet, dass** das Indikatorelement ein Magnet (24, 56) ist.

6. Differenzdruckmesseinrichtung nach Anspruch 5, **dadurch gekennzeichnet, dass** der Sensor ein AMR-Sensor (34, 58) ist.

7. Differenzdruckmesseinrichtung nach einem der vorangehenden Ansprüche, **dadurch gekennzeichnet, dass** der Sensor außerhalb der Druckbereiche (20, 22) angeordnet ist.

8. Differenzdruckmesseinrichtung nach einem der vorangehenden Ansprüche, **dadurch gekennzeichnet, dass** der Sensor außerhalb der Druckbereiche (20, 22) angeordnet ist, wobei der Sensor durch eine Wandung, die insbesondere Teil eines Gehäuses ist, getrennt ist.

9. Differenzdruckmesseinrichtung nach einem der vorangehenden Ansprüche, **dadurch gekennzeichnet, dass** mehrere Sensoren in Umfangsrichtung verteilt angeordnet sind.

## Claims

1. Differential pressure measuring device (10, 50) comprising a housing (18) having two pressure regions (20, 22) that are sealed against each other and separated by a diaphragm (12, 54), which diaphragm (12, 54) comprises a circular pressure plate (14) surrounded by an elastic peripheral region (16) so as to ensure axial movement of the pressure plate (14), with an indicator element (24, 56) being furthermore provided which is fixedly connected to the pressure plate (14) and whose position can be evaluated in a contactless manner by means of a provided sensor (34, 58), wherein at least one pair of springs (28, 52) is furthermore provided, wherein one spring (30, 32) each of said pair of springs is arranged in an associated pressure region (20, 22) and the springs (30, 32) of said pair of springs (28, 52) exert an opposite spring force on the pressure plate (14), **characterized in that** at least three pairs of springs (28, 52) are provided, with each said pair of springs (28, 52) comprising two coaxially arranged helical springs and with the springs (28, 52) associated with a pressure region being distributed along a circumference of a circle.

2. Differential pressure measuring device according to claim 1, **characterized in that** the springs (28, 52) associated with a pressure region are of the same type.

3. Differential pressure measuring device according to any one of the preceding claims, **characterized in that** the indicator element (24, 56) is eccentrically mounted on the pressure plate.

4. Differential pressure measuring device according to any one of the preceding claims, **characterized in that** the indicator element (24, 56) lies in the axial direction between the ends of the pair of springs (28, 52) that are remote from the pressure plate.

5. Differential pressure measuring device according to any one of the preceding claims, **characterized in that** the indicator element is a magnet (24, 56).

6. Differential pressure measuring device according to claim 5, **characterized in that** the sensor is an AMR sensor (34, 58).

7. Differential pressure measuring device according to any one of the preceding claims, **characterized in that** the sensor is arranged outside the pressure regions (20, 22).

8. Differential pressure measuring device according to any one of the preceding claims, **characterized in that** the sensor is arranged outside the pressure regions (20, 22), wherein the sensor is separated by a wall which is in particular part of a housing.

9. Differential pressure measuring device according to any one of the preceding claims, **characterized in that** a plurality of sensors are distributed in the circumferential direction.

## Revendications

1. Dispositif de mesure de pression différentielle (10, 50) comprenant un boîtier (18) pourvu de deux zones de pression (20, 22) étanchéifiées l'une par rapport à l'autre, qui sont séparées par une membrane (12, 54), dans lequel la membrane (12, 54) comporte une plaque de pression (14) circulaire, qui est entourée par une zone périphérique (16) élastique, ce qui a pour effet de garantir un mouvement axial de la plaque de pression (14), dans lequel un élément indicateur (24, 56) relié fixe à la plaque de pression (14) est en outre prévu, dont la position peut être évaluée sans contact par un capteur (34, 58), dans lequel au moins une paire de ressorts (28, 52) est en outre prévue, dans lequel chaque ressort (30, 32) de la paire de ressorts (28, 52) est agencé dans une zone de pression (20, 22) associée et les ressorts (30, 32) de la paire de ressorts(28, 52) exercent une force élastique opposée sur la plaque de pression (14), **caractérisé en ce qu'**au moins trois paires de ressorts (28, 52) sont prévues, chaque paire de ressorts (28, 52) comportant deux ressorts hélicoïdaux agencés de manière coaxiale et les ressorts (28, 52) associés à une zone de pression sont répartis le long d'une périphérie circulaire.

2. Dispositif de mesure de pression différentielle selon la revendication 1, **caractérisé en ce que** les ressorts (30, 32) associés à une zone de pression (20, 22) sont du même type.

3. Dispositif de mesure de pression différentielle selon l'une quelconque des revendications précédentes, **caractérisé en ce que** l'élément indicateur (24, 56) est agencé de manière excentrée sur la plaque de pression.

4. Dispositif de mesure de pression différentielle selon l'une quelconque des revendications précédentes, **caractérisé en ce que** l'élément indicateur (24, 26) se situe dans la direction axiale entre les extrémités de la paire de ressorts (28, 52) éloignées de la plaque de pression.

5. Dispositif de mesure de pression différentielle selon l'une quelconque des revendications précédentes, **caractérisé en ce que** l'élément indicateur est un aimant (24, 56).

6. Dispositif de mesure de pression différentielle selon la revendication 5, **caractérisé en ce que** le capteur est un capteur AMR (34, 58).

7. Dispositif de mesure de pression différentielle selon l'une quelconque des revendications précédentes, **caractérisé en ce que** le capteur est agencé à l'extérieur des zones de pression (20, 22).

8. Dispositif de mesure de pression différentielle selon l'une quelconque des revendications précédentes, **caractérisé en ce que** le capteur est agencé à l'extérieur des zones de pression (20, 22), dans lequel le capteur est séparé par une paroi, qui fait en particulier partie d'un boîtier.

9. Dispositif de mesure de pression différentielle selon l'une quelconque des revendications précédentes, **caractérisé en ce que** plusieurs capteurs sont répartis dans la direction périphérique.
